# EUROPÄISCHE PATENTSCHRIFT

(11) **EP 0 709 019 B1**
(45) Veröffentlichungstag und Bekanntmachung des Hinweises auf die Patenterteilung: **10.06.1998**
(21) Anmeldenummer: 95113738.9
(22) Anmeldetag: 01.09.1995
(51) Int. Cl.: A01D 78/10

(54) **Kreiselschwader**
Rotary swather
Andaineuse rotative

(30) Priorität: 29.10.1994 DE 9417375 U
(43) Veröffentlichungstag der Anmeldung: 01.05.1996
(73) Patentinhaber: CLAAS SAULGAU GMBH, D-88340 Saulgau (DE)
(72) Erfinder: Deni, Franz, D-88348 Saulgau-Bogenweiler (DE)

(56) Entgegenhaltungen:
- EP-A- 0 507 408
- EP-A- 0 526 365
- DE-U- 8 807 054
- DE-U- 9 015 320
- DE-U- 9 216 498

## Beschreibung

Die Neuerung bezieht sich auf Kreiselschwader nach dem Oberbegriff des Hauptanspruches.

Es sind beispielsweise aus der Gebrauchsmusterschrift 90 15 320 Kreiselschwader bekannt, bei denen zur Erreichung einer günstigen Transportstellung nach Hochschwenken der Schwadkreisel das Maschinengestell hydraulisch einknickbar und gleichfalls hydraulisch ein Schwadformer hochklappbar ist.

Die Kombination beider hydraulisch gesteuerter Betätigungen wurde bislang nicht bei vielen älteren Schleppern, bei denen nur ein steuerbarer Druckanschluß für die Anbaugeräte zur Verfügung steht, betrieben.

Dieser Nachteil wird nach der Neuerung dadurch ausgeschaltet, daß sowohl die Hubzylinder für die Schwadkreisel, als auch der Hubzylinder für den Schwadformer von einer gemeinsamen, vom Schlepper aus beaufschlagten Druckleitung angesteuert werden, wobei durch die Wahl geeigneter Wirkquerschnitte für die Hubzylinder erreicht wird, daß bei Druckanstieg in der Druckleitung zuerst der Hubzylinder für den Schwadformer, und erst nach Erreichung dessen Endstellung und bei weiterem Druckanstieg, der Hubzylinder für den Schwadkreisel betätigt wird.

Damit bei einem eventuellen Druckabfall in der Transportstellung der hochgeklappte Schwadformer in einer durch Schwerkraft gesicherten Position verbleibt, können nach einem weiteren Merkmal der Neuerung die Schwenkachsen für den Schwadkreisel und für den Schwadformer so angeordnet werden, daß sie einen Winkel von deutlich weniger als 90° einschließen. Der Schwerpunkt des Schwadformers liegt dann in der hochgeschwenkten Transportstellung tiefer als das Schwenkgelenk, wodurch ein Moment entsteht, das den Schwadformer in dieser Lage festhält.

Die Neuerung wird anhand von vier Abbildungen beispielsweise erläutert.
- Figur 1: zeigt einen Kreiselschwader mit zwei Schwadkreiseln in Draufsicht,
- Figur 2: zeigt den gleichen Gegenstand in einer Teilansicht in Richtung des Pfeiles A der Figur 1,
- Figur 3: zeigt eine vergrößerte Teilansicht des Schwadformers in Richtung des Pfeiles C der Figur 1,
- Figur 4: zeigt eine Teilansicht in Richtung des Pfeiles B der Figur 1 mit einem Schwadkreisel in Transportstellung.

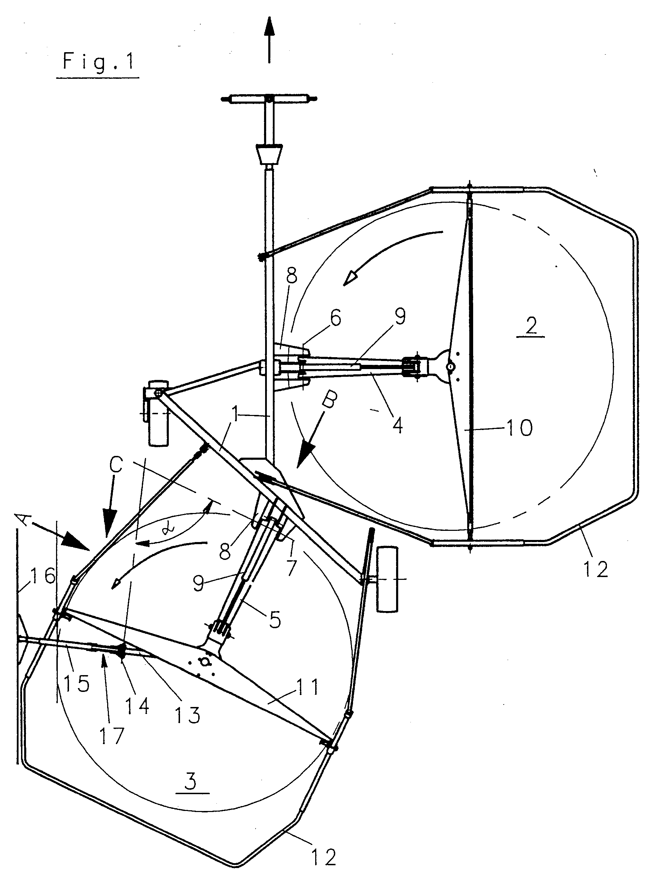

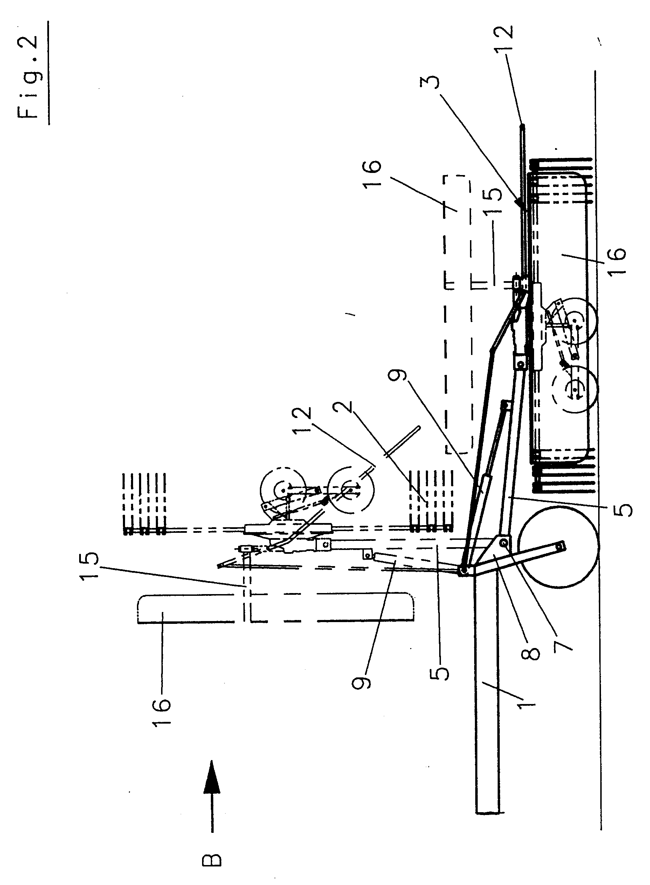

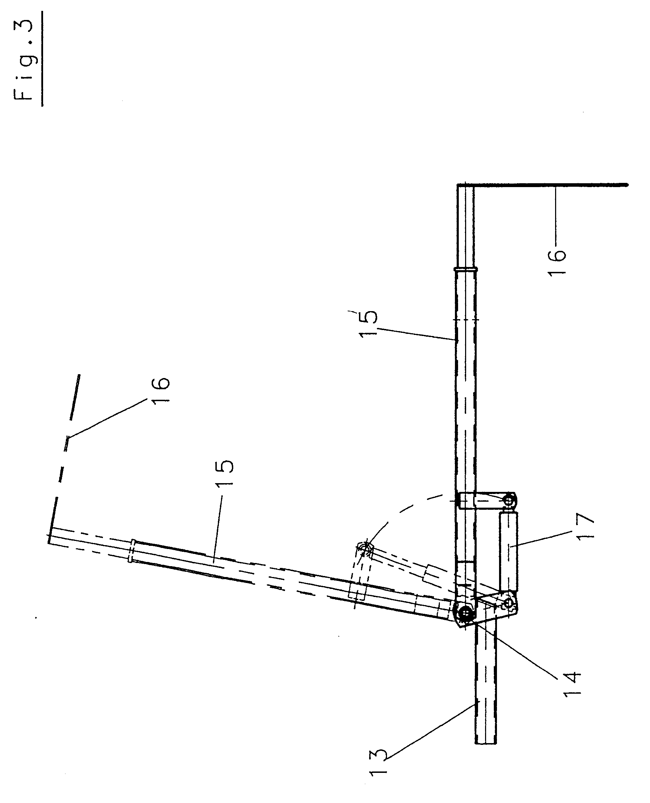

An dem zweirädrigen Fahrgestell (1) eines Kreiselschwaders sind zwei Schwadkreisel (2, 3) höhenbeweglich angelenkt. Deren Tragarme (4, 5) sind über horizontale Gelenkbolzen (6, 7) mit Konsolen (8) des Fahrgestelles (1) verbunden. In der Arbeitsstellung liegen sie in einer etwa horizontalen Ebene. Zur Erzielung einer Transportstellung können sie mit hydraulischen Hubzylindern (9) in eine etwa vertikale Lage verschwenkt werden (Figur 2, gestrichelt). Die Tragarme (4, 5) sind an einem Ende mit Querträgern (10, 11) fest verbunden, die im wesentlichen der Lagerung von Schutzbügeln (12) dienen. An einem der Querträger (11) ist eine Stütze (13) befestigt, an der mittels eines Gabelgelenkes (14) ein Auslegerarm (15) angelenkt ist. An dessen freiem Ende befindet sich ein Schwadformer (16), der in der Arbeitsstellung in einer etwa in Fahrtrichtung liegenden Vertikalebene im Abstand zu dem Arbeitskreisel (3) angeordnet ist. Der Auslegerarm (15) und damit auch der Schwadformer (16) können mittels eines hydraulischen Hubzylinders (17) (Figur 3) zur Erzielung einer Transportstellung in eine etwa senkrechte Stellung verbracht werden (Figur 2, gestrichelt, Figur 3, gestrichelt). Die Verlängerung der Drehachse des Gabelgelenkes (14) und die Verlängerung der Achse des Gelenkbolzens (7) schließen einen Winkel α von etwa 70° ein (Figur 1). Die hydraulischen Hubzylinder (9) und (17) sind an eine gemeinsame, vom Schlepper aus angesteuerte Druckleitung angeschlossen, die hier nicht bildlich dargestellt ist. Die Wirkquerschnitte der Hubzylinder (9) und (17) sind so ausgelegt, daß bei Druckanstieg in der Druckleitung zuerst der Hubzylinder (17) für die Betätigung des Auslegerarmes (15) ausgefahren wird, bis dieser seine Endstellung erreicht.

Der Auslegerarm (15) und der Schwadformer (16) nehmen dann die in Figur 2 gestrichelt gezeichnete Stellung ein. Bei weiterem Druckanstieg in der Druckleitung werden auch die Hubzylinder (9) ausgefahren, die bewirken, daß die Schwadkreisel (2, 3) in eine etwa senkrechte Transportstellung verbracht werden. Der Auslegerarm (15) und der Schwadformer (16) haben dann die in Figur 2 strichpunktiert gezeichnete Stellung.

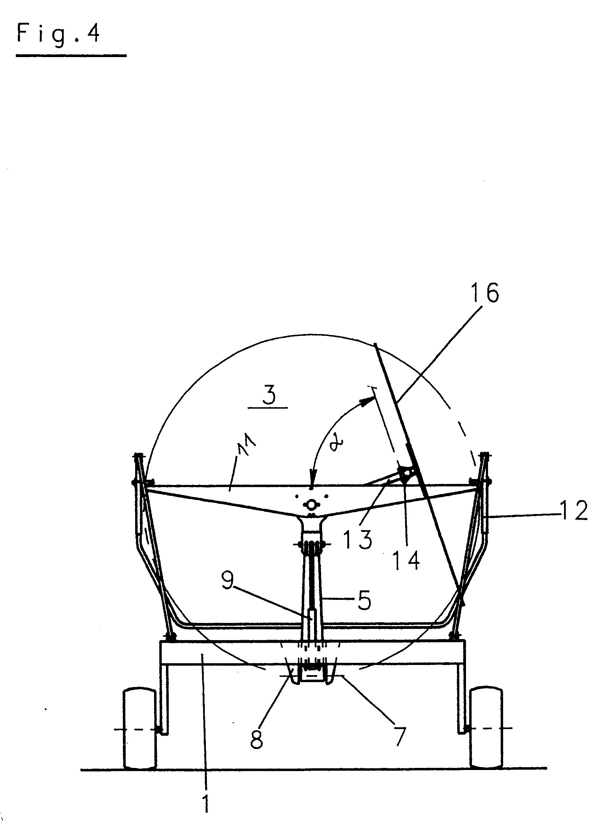

Die Umstellung des Kreiselschwaders von der Arbeitsstellung (Figur 1) in die Transportstellung (Figur 2 und Figur 4) geschieht also in der Reihenfolge: Hochschwenken des Auslegerarmes (15) und des Schwadformers (16), danach Hochschwenken der Schwadkreisel (2, 3).

Dadurch, daß der Winkel α von deutlich weniger als 90° zwischen der Schwenkachse (7) des Schwadkreisels (3) und der Schwenkachse (14) des Schwadformers (16) ausgebildet ist, liegt der Schwerpunkt des Schwadformers (16) in der Transportstellung (Figur 4) deutlich tiefer als dessen Gabelgelenk (14), wodurch gesichert ist, daß der Schwadformer (16) in der Transportstellung auch bei Druckabfall in der Druckleitung eine stabile Stellung einnimmt.

## Patentansprüche

1. Kreiselschwader mit mindestens einem, zur Erzielung einer Transportstellung mittels eines hydraulischen Hubzylinders (9) hochschwenkbaren Schwadkreisel (2, 3), bzw. einem, für die Transportstellung hydraulisch hochklappbaren Schwadformer (16), dadurch gekennzeichnet, daß die Hubzylinder (9) für die Schwadkreisel (2, 3) und der Hubzylinder (17) für den Schwadformer (16) von einer gemeinsamen, vom Schlepper aus beaufschlagten Druckleitung angesteuert werden, und die Querschnitte der Hubzylinder (9, 17) so ausgelegt sind, daß bei Druckanstieg in der Druckleitung zuerst der Hubzylinder (17) für den Schwadformer (16) bis zu seinem Endanschlag ausgefahren wird und erst bei weiterem Druckanstieg in der Druckleitung die Hubzylinder (9) für die Aushebung der Schwadkreisel (2, 3) betätigt werden.

2. Kreiselschwader nach Anspruch 1, dadurch gekennzeichnet, daß die Schwenkachse (7) für den Schwadkreisel (3) und die Schwenkachse (14) für den Schwadformer (16) einen Winkel α von deutlich weniger als 90° einschließen.

## Claims

1. A rotary windrower comprising at least one windrowing rotor (2, 3) which can be pivoted upwardly to attain a transportation position by means of a hydraulic lifting cylinder (9) and a respective windrow-forming device (16) which can be pivoted upwardly hydraulically for the transportation position, characterised in that the lifting cylinders (9) for the windrowing rotors (2, 3) and the lifting cylinder (17) for the windrow-forming device (16) are actuated by a common pressure line which is operated from the tractor, and that the cross-sections of the lifting cylinders (9, 17) are such that upon an increase in the pressure in the pressure line firstly the lifting cylinder (17) for the windrow-forming device (16) is extended as far as its end abutment and it is only upon a further increase in the pressure in the pressure line that the lifting cylinders (9) are actuated for lifting up the windrowing rotors (2, 3).

2. A rotary windrower according to claim 1 characterised in that the pivot axis (7) for the windrowing rotor (3) and the pivot axis (14) for the windrow-forming device (16) include an angle α of markedly less than 90°.

## Revendications

1. Andaineuse rotative comprenant, respectivement, au moins un râteau andaineur rotatif (2, 3) pouvant être relevé par pivotement, au moyen d'un vérin hydraulique de levage (9), en vue d'obtenir une position de transport, ou bien un formateur d'andains (16) pouvant être relevé hydrauliquement par pivotement pour la position de transport, caractérisée par le fait que les vérins de levage (9) affectés aux râteaux andaineurs rotatifs (2, 3), et le vérin de levage (17) affecté au formateur d'andains (16), sont activés par un conduit de pression commun sollicité à partir du tracteur, et les sections transversales des vérins de levage (9, 17) sont conçues de façon telle que, en cas d'accroissement de pression dans le conduit de pression, le vérin de levage (17) affecté au formateur d'andains (16) soit tout d'abord déployé jusqu'à sa butée extrême et que les vérins de levage (9) soient actionnés, en vue du soulèvement des râteaux andaineurs rotatifs (2, 3), uniquement en cas d'accroissement de pression supplémentaire dans le conduit de pression.

2. Andaineuse rotative selon la revendication 1, caractérisée par le fait que l'axe de pivotement (7) affecté au râteau andaineur rotatif (3), et l'axe de pivotement (14) affecté au formateur d'andains (16), décrivent un angle α nettement inférieur à 90°.
